# EUROPÄISCHE PATENTANMELDUNG

(11) **EP 2 728 479 A1**
(43) Veröffentlichungstag der Anmeldung: **07.05.2014**
(21) Anmeldenummer: 12191209.1
(22) Anmeldetag: 05.11.2012
(51) Int. Cl.: G06F 11/16, G06F 11/20

(54) **Verfahren und Vorrichtung zum Auslesen eines Datenspeichers**

(71) Anmelder: Siemens Aktiengesellschaft, 80333 München (DE)
(72) Erfinder: Graf, Rene, 90443 Nürnberg (DE)

(57) **Zusammenfassung**

Zum Auslesen eines Datenspeichers (14) wird ein Verfahren (100) bereitgestellt, das folgende Schritte umfasst: Schützen (110) mindestens eines ersten Teilbereichs (71) des Datenspeichers (14) gegen Schreibzugriffe, und Übertragen (120) von Daten aus den schreibgeschützten ersten Teilbereichen (71) zu einer Datensenke (20), wobei folgende Schritte durchgeführt werden, wenn durch eine weitere Instanz (19) ein Schreibzugriff auf einen der schreibgeschützten ersten Teilbereiche (71) erfolgt: Erkennen (121) des Schreibzugriffs auf den schreibgeschützten ersten Teilbereich (71), Kopieren (122) der Daten des schreibgeschützten ersten Teilbereichs (71) in einen zweiten Teilbereich (72) des Datenspeichers (14), Freischalten (123) des zweiten Teilbereichs (72) für mindestens einen Schreibzugriff der weiteren Instanz (19), Einrichten (124) einer Umleitung zumindest für Zugriffe der weiteren Instanz (19), die an den schreibgeschützten ersten Teilbereich (71) gerichtet sind, auf den zweiten Teilbereich (72) und Durchführen (125) des Schreibzugriffs auf den zweiten Teilbereich (72).

Außerdem wird eine Vorrichtung (12) zum Auslesen eines Datenspeichers (14) vorgeschlagen, die zum Durchführen des Verfahrens (100) vorbereitet ist.

## Beschreibung

Die Erfindung betrifft ein Verfahren zum Auslesen eines Datenspeichers.

Außerdem betrifft die Erfindung eine Vorrichtung zum Auslesen eines Datenspeichers.

Für den Anlauf einer gedoppelten Datenverarbeitungseinrichtung ist ein Anlaufverfahren bekannt, in dem zunächst die erste Datenverarbeitungseinrichtung und erst dann die zweite Datenverarbeitungseinrichtung in Betrieb genommen wird. Die Inbetriebnahme der zweiten Datenverarbeitungseinrichtung durchläuft typischerweise folgende zwei Phasen. In einer ersten Phase wird die zweite Datenverarbeitungseinrichtung an die erste Datenverarbeitungseinrichtung angekoppelt. Dabei werden aus der ersten Datenverarbeitungseinrichtung alle nichtveränderlichen Daten (beispielsweise Programmcode) übertragen. In einer zweiten Phase wird ein Aufdaten der zweiten Datenverarbeitungseinrichtung mit veränderlichen Daten aus einem Arbeitsspeicher der ersten Datenverarbeitungseinrichtung durchgeführt. Ziel des Aufdatens ist es, dass die zweite Datenverarbeitungseinrichtung nach dem Aufdaten zum gleichen Zeitpunkt einen exakt selben Zustand eingenommen hat wie die erste Datenverarbeitungseinrichtung. Dies betrifft insbesondere eine Übereinstimmung der Arbeitsspeicher der beiden Datenverarbeitungseinrichtungen. Bei ungestörtem Betrieb entwickeln beide Datenverarbeitungseinrichtungen ihre jeweiligen Zustände synchron und in identischer Weise weiter, so dass sich die Arbeitsspeicher beider Datenverarbeitungseinrichtungen nach dem Aufdaten zwar laufend verändern, aber trotzdem zu jedem Zeitpunkt genau überstimmen.

In Anwendungen, die eine hohe Verfügbarkeit fordern, besteht die Schwierigkeit, dass die erste Datenverarbeitungseinrichtung für das Aufdaten der zweiten Datenverarbeitungseinrichtung nicht für eine so lange Zeit angehalten werden darf, bis die veränderlichen Daten aus dem Arbeitsspeicher der ersten Datenverarbeitungseinrichtung vollständig in den Arbeitsspeicher der zweiten Datenverarbeitungseinrichtung übertragen wurden.

Der Erfindung liegt die Aufgabe zugrunde, ein Verfahren bereitzustellen, mit dem ein Übertragen der veränderlichen Daten aus dem Arbeitsspeicher einer ersten Datenverarbeitungseinrichtung in den Arbeitsspeicher einer zweiten Datenverarbeitungseinrichtung vollständig, fehlerfrei und zeitsparend durchgeführt werden kann.

Erfindungsgemäß wird diese Aufgabe dadurch gelöst, dass ein Verfahren zum Auslesen eines Datenspeichers bereitgestellt wird, das folgende Schritte umfasst: Schützen mindestens eines ersten Teilbereichs des Datenspeichers gegen Schreibzugriffe und Übertragen von Daten aus den schreibgeschützten ersten Teilbereichen zu einer Datensenke, wobei folgende Schritte durchgeführt werden, wenn durch eine weitere Instanz ein Schreibzugriff auf einen der schreibgeschützten ersten Teilbereiche erfolgt: Erkennen des Schreibzugriffs auf den schreibgeschützten ersten Teilbereich, Kopieren der Daten des schreibgeschützten ersten Teilbereichs in einen zweiten Teilbereich des Datenspeichers, Freischalten des zweiten Teilbereichs für mindestens einen Schreibzugriff der weiteren Instanz, Einrichten einer Umleitung zumindest für Zugriffe der weiteren Instanz, die an den schreibgeschützten ersten Teilbereich gerichtet sind, auf den zweiten Teilbereich und Durchführen des Schreibzugriffs auf den zweiten Teilbereich.

In Bezug auf die Vorrichtung zum Auslesen eines Datenspeichers wird die Aufgabe dadurch gelöst, dass die Vorrichtung zum Durchführen des erfindungsgemäßen Verfahrens vorbereitet ist.

Durch das Schützen ganzer Speicherbereiche gegen Schreibvorgänge vereinfacht sich das Übertragen der veränderlichen Daten des Datenspeichers. Zum Übertragen der Daten des Datenspeichers werden solange schreibgeschützte Teilbereiche übertragen, bis alle schreibgeschützten Teilbereiche übertragen sind und kein zweiter Teilbereich mehr besteht, der in einen neuen schreibgeschützten Teilbereich umgewandelt werden kann. Wenn eine Übertragungsrate der Inhalte schreibgeschützter Teilbereiche im zeitlichen Mittel höher ist als eine Erzeugungsrate von zweiten Teilbereichen, wird der zur Datensenke zu übertragende Gesamtumfang der zur Datensenke noch zu übertragenden Daten mit der zeit immer kleiner. Schließlich schwindet der noch zu übertragende Datenumfang vollständig, weil zum Schluss kein noch zu übertragender schreibgeschützter Teilbereich mehr übrigbleibt. Damit ist das Aufdaten der Datensenke abgeschlossen.

Vorzugsweise wird das Übertragen der Daten der Teilbereiche ausschließlich auf schreibgeschützte Teilbereiche angewendet, zu denen kein zweiter Teilbereich besteht. Denn damit wird erreicht, dass der Geschwindigkeitsunterschied zwischen dem Abarbeiten der schreibgeschützten und dem Erzeugen von zweiten Teilbereichen möglichst groß ist und das Aufdaten der Datensenke möglichst schnell abgeschlossen wird. Um dies zu ermöglichen, ist es von Vorteil, wenn eine Instanz, die das Übertragen der Daten der schreibgeschützten Teilbereiche zur Datensenke verwaltet, auf eine Information der Speicherverwaltungseinheit und/oder der Ausnahmebehandlung zugreifen kann, die Auskunft darüber gibt, zu welchen schreibgeschützten Teilbereichen kein zweiter Teilbereich besteht. zweckmäßig ist es, wenn die Umleitung auch Lesezugriffe der weiteren Instanz, die an den schreibgeschützten ersten Teilbereich gerichtet sind, auf den zweiten Teilbereich des Datenspeichers umleitet. Hierdurch wird sichergestellt, dass die weitere Instanz bei störungsfreiem Betrieb an angewählten Speicheradressen genau diejenigen Daten ausliest, die sie dort vorher hineingeschrieben hat.

Alternativ oder zusätzlich sieht eine Weiterbildung vor, dass ein Übertragen von Daten aus einem schreibgeschützten ersten Teilbereich zu der Datensenke abgebrochen wird, wenn ein Schreibzugriff auf einen schreibgeschützten Teilbereich erkannt wurde, dessen Daten gerade zur Datensenke übertragen werden. Hierdurch wird vermieden, dass Übertragungszeit für ein Übertragen von Daten aus einem ersten Teilbereich verschenkt wird, für den eine Kopie in einem (nicht schreibgeschützten) zweiten Teilbereich angelegt wird, dessen Daten zu einem späteren Zeitpunkt ohnehin zu übertragen sind.

Um den Prozessor der ersten Datenverarbeitungseinrichtung zu entlasten, kann für das Übertragen der schreibgeschützten Teilbereiche von dem ersten Datenspeicher zu der Datensenke ein DMA-Verfahren (DMA = Direct Memory Access) angewendet werden.

Die zugriffe der weiteren Instanz und die zugriffe der Instanz, die das Übertragen der Daten der schreibgeschützten Teilbereiche zur Datensenke verwaltet, können auf den Datenspeicher auch dann fehlerfrei erfolgen, wenn die Zugriffe der weiteren Instanz nicht mit den zugriffen der Instanz, die das Übertragen der Daten der schreibgeschützten Teilbereiche zur Datensenke verwaltet, koordiniert sind. Die zugriffe der beiden Instanzen können sogar zeitgleich erfolgen.

Eine Weiterbildung sieht vor, dass der Schreibzugriff auf den schreibgeschützten ersten Teilbereich ein Ausführen einer Sonderbehandlungsroutine veranlasst. Hierdurch kann der Schreibzugriff mit Unterstützung von Funktionen durchgeführt werden, die in fortschrittlichen Speicherverwaltungseinheiten verfügbar sind.

Es ist zweckmäßig, wenn das Veranlassen des Ausführens der Sonderbehandlungsroutine das Kopieren der Daten von einem schreibgeschützten ersten Teilbereich in einen zweiten Teilbereich und/oder das Freischalten eines zweiten Teilbereichs für mindestens einen Schreibzugriff und/oder das Einrichten einer Umleitung und/oder das Durchführen eines Schreibzugriffs auf einen zweiten Teilbereich umfasst. Durch Ausführen mindestens eines dieser Verfahrensschritte in der Sonderbehandlungsroutine können übrige Systemkomponenten wie die Datensenke und/oder die weitere Instanz weitgehend von Aufgaben zur Auflösung des Schreib-Lese-Konflikts freigehalten werden.

Insbesondere ist es bevorzugt, wenn der zweite Teilbereich nach Ablauf des Schreibzugriffs schreibgeschützt wird und für den weiteren Ablauf des Verfahrens als ein neuer schreibgeschützter erster Teilbereich angesehen wird. Hierdurch können in Fortführung des Übertragens von Daten aus schreibgeschützten ersten Teilbereichen zur Datensenke auch diejenigen Daten fehlerfrei zur Datensenke übertragen werden, die während des Übertragens durch Schreibzugriffe der weiteren Instanz verändert wurden.

Besonders bevorzugt ist, wenn mit Einrichten des Schreibschutzes für den ursprünglich zweiten Teilbereich auch für Lesezugriffe der Datensenke auf den ersten Teilbereich eine Umleitung auf den neuen ersten Teilbereich eingerichtet wird. Hierdurch vereinfacht sich die Funktion der Instanz, die das Übertragen der Daten der schreibgeschützten Teilbereiche zur Datensenke verwaltet, weil sich dann die virtuellen Adressbereiche für Teilbereiche, deren Daten sie noch zu übertragen hat, im Laufe des Abarbeitens der Verfahrensschritte nicht verändern.

Eine Weiterbildung sieht vor, dass das Schützen des zweiten Teilbereichs gegen Schreibzugriffe erst nach Ablauf einer Karenzzeit nach Erkennung oder Ablauf des Schreibzugriffs erfolgt und/oder erst erfolgt, wenn ein vorbestimmter Anteil von noch nicht umgeleiteten ersten Teilbereichen ausgelesen ist, und/oder erst erfolgt, wenn eine vorbestimmte Anzahl von noch nicht umgeleiteten ersten Teilbereichen ausgelesen ist. Durch eine Auswahl dieser Maßnahmen kann ein Verwaltungsaufwand für die Sonderbehandlungsroutine auf ein wirtschaftlich zweckmäßiges Maß reduziert werden.

Die Erfindung ist anhand der beigefügten Zeichnungen näher erläutert, in denen zeigen:
- FIG 1: ein schematisches Blockschaltbild einer gedoppelten Datenverarbeitungseinrichtung, und
- FIG 2: ein schematisches Ablaufdiagram eines Verfahrens zum Übertragen von Daten aus einem Datenspeicher zu einer Datensenke.

Die nachfolgend näher geschilderten Ausführungsbeispiele stellen bevorzugte Ausführungsformen der vorliegenden Erfindung dar.

Bevor anhand der Figuren konkrete Ausführungsbeispiele erläutert werden, wird der Überblick über eine mögliche Anwendung des erfindungsgemäßen Verfahrens nun noch etwas vertieft.

Es gibt hochverfügbare speicherprogrammierte Steuerungen, die zwei zentralprozessoren umfassen, die mittels eines Lichtwellenleiters gekoppelt sind. Die beiden zentralprozessoren arbeiten ein Anwenderprogramm synchron ab, so dass beide zentralprozessoren identische Daten aufweisen. Die Daten liegen in sogenannten Datenbausteinen vor. Die Datenbausteine werden im Folgenden auch als 'Teilbereiche' bezeichnet. Daten, die von außen kommen, werden kommunikationstechnisch auf beiden Teilsystemen zeitgleich aktualisiert. Der Zustand der Synchronität wird nicht direkt nach Einschalten des Systems erreicht. Zunächst läuft nur ein erster der beiden zentralprozessoren an. Sobald der erste Zentralprozessor den Zustand 'RUN' erreicht hat, kann der zweite Zentralprozessor einen Prozess starten, der ihn auf den ersten Zentralprozessor aufsynchronisiert. Dabei soll der erste Zentralprozessor ohne Einschränkung der Dynamik weiterlaufen.

Der Synchronisationsprozess erfolgt in zwei Phasen. In der ersten Phase, die mit 'Ankoppeln' bezeichnet wird, werden alle statischen Daten an den zweiten zentralprozessor übertragen. Zu den statischen Daten, die sich im laufenden Betrieb nicht ändern, zählen der Programmcode sowie Konfigurationsdaten. Die Möglichkeit, das Programm oder die Konfiguration im laufenden Betrieb zu ändern, wird solange abgeschaltet, bis der synchrone Zustand erreicht ist. Zu den Konfigurationsdaten zählen auch Kommunikationsverbindungen und die Anbindung der Peripherie. Nach Abschluss der ersten Phase sind alle Kommunikationsverbindungen doppelt aufgebaut und alle Daten, die von außen kommen, werden synchron an beide Zentralprozessoren übertragen. In der Gegenrichtung ist zu diesem Zeitpunkt nach wie vor nur der erste Zentralprozessor aktiv, der die Anwendung (beispielsweise einen Automatisierungsprozess) steuert.

In der zweiten Phase, die mit 'Aufdaten' bezeichnet wird, werden die eigentlichen (veränderlichen) Daten von dem laufenden zentralprozessor an die ankoppelnde Datenverarbeitungseinrichtung übertragen. Dieser Vorgang kann nicht in einem Zug erfolgen, da der laufende Zentralprozessor nicht angehalten werden kann. Stattdessen wird ein iterativer Prozess durchlaufen, bei dem immer nur die Daten an den anderen Zentralprozessor übertragen werden, die sich seit dem letzten Abgleich geändert haben. Das Übertragen aller statischen und dynamischen Daten erfolgt typischerweise über eine Lichtwellenleiterkopplung, die als Sync-Kopplung bezeichnet wird. Entsprechend der beschriebenen Schritte wird der gesamte Prozess mit 'Ankoppeln und Aufdaten' oder als AuA-Sequenz bezeichnet. Um das Aufdaten zu beschleunigen oder überhaupt zu ermöglichen, ist es erforderlich, in möglichst kurzer Zeit zu erkennen, welche Daten seit der letzten Synchronisation verändert wurden.

Im Folgenden wird ein Konzept erläutert, das eine hardwarenahe Realisierung fördert und mit dem ein zeitbedarf für das Aufdaten auch bei großen Datenmengen in akzeptablem Rahmen gehalten werden kann.

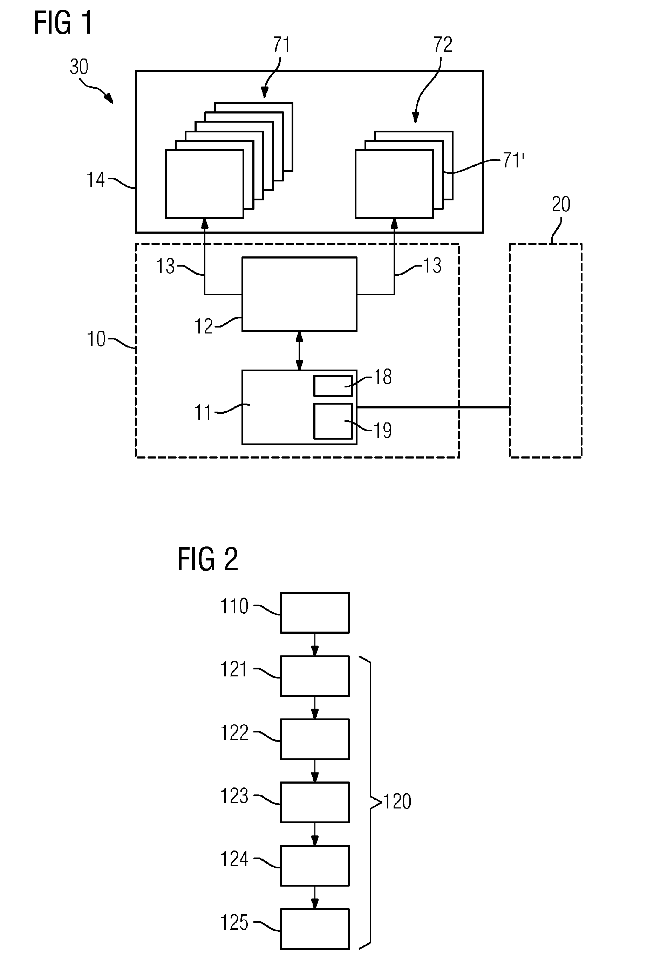

Die FIG 1 zeigt eine gedoppelte Datenverarbeitungseinrichtung 30, 20 einer hochverfügbaren speicherprogrammierten Steuerung. Die Datenverarbeitungseinrichtung 30 umfasst einen ersten Controller 10 mit einem ersten Prozessor 11 und mit einer Speicherverwaltungseinheit 12 sowie einen zweiten gleichartigen Controller, der im Folgenden als Datensenke 20 bezeichnet wird. Außerdem ist an dem ersten Controller 10 ein erster Busanschluss 13 zum Anschluss eines Datenspeichers 14 vorgesehen.

Moderne Prozessoren haben eine Speicherverwaltungseinheit (*MMU* = *Memory-Management-Unit),* die im Wesentlichen folgende zwei Aufgaben erfüllt. Zum einen kann sie Bereiche im Speicher definieren, die nur von bestimmten Softwareteilen (Prozessen) angesprochen werden dürfen. Zugriffsversuche durch andere Prozesse führen zur Erkennung und Anzeige eines Zugriffsfehlers. Zum anderen kann die Speicherverwaltungseinheit eine Verbindung zwischen virtuellen und physikalischen Speicheradressen herstellen. Dieses Konzept ermöglicht, dass mehr Prozesse laufen können als physikalischer Speicher zur Verfügung steht, weil damit nicht benutzter Speicher auf einen Massenspeicher (beispielsweise eine Festplatte) ausgelagert werden kann. Selbst wenn der Speicher ausreicht, können die einzelnen Prozesse einen gleichen Aufbau im virtuellen Speicher haben, während sie im physikalischen Speicher an vollkommen unterschiedlichen Adressen liegen. Dazu wird der Speicher in sogenannte Speicherseiten (pages) unterteilt. Eine typische Speicherseitengröße sind 4 Kilobyte. Bei manchen Prozessoren lässt sich die Größe für einzelne Speicherseiten auch unterschiedlich einstellen.

Die Speicherverwaltungseinheit 12 kann den Zugriff auf eine Speicherseite in Abhängigkeit des aktuellen Prozesses und/oder auf Basis von Speichermerkmalen kontrollieren. So können eine oder mehrere Speicherseiten als nicht zugriffsfähig markiert werden, um zu verhindern, dass im Datensegment eines Programms unbekannter Code (Schad-Code) eingeschleust wird. Ebenso kann eine Speicherseite als 'nur lesbar' (*read-only*) gekennzeichnet werden. Bei jeglichem Schreibzugriff darauf löst die Speicherveraltungseinheit 12 ein Durchführen einer Ausnahmebehandlung 18 (*exception handling*) in dem Prozessor 11 und/oder der Speicherverwaltungseinheit 12 aus.

Es wird vorgeschlagen, eine oder mehrere Fähigkeiten der Speicherverwaltungseinheit 12 zu nutzen, um beim 'Aufdaten' in möglichst kurzer Zeit zu erkennen, welche Daten seit der letzten Synchronisation verändert wurden. Vorzugsweise wird jeder Datenbaustein (Teilbereich) vollständig in einer einzelnen Speicherseite abgelegt, so dass eine eindeutige zuordnung zwischen Datenbaustein und Speicherseite entsteht.

Zu Beginn des Aufdatens werden alle Speicherseiten 71 als 'nur lesbar' (*read-only*)*,* d.h. als schreibgeschützt, markiert und die Übertragung der Daten gestartet. Wenn ein auf dem ersten Prozessor laufendes Programm 19 auf eine Speicherseite 71 schreibend zugreift, löst die Speicherverwaltungseinheit 12 ein Durchführen einer Ausnahmebehandlung 18 *(exception handling*) aus, die im zentralprozessor 11 und/oder der Speicherverwaltungseinheit 12 ausgeführt wird. Die Ausnahmebehandlung 18 ermittelt die entsprechende Speicherseite 71 und legt davon eine beschreibbare Kopie 72 im physikalischen Speicher 14 an. Anschließend wird die virtuelle Adresse der Datenbausteine (Teilbereiche) dieser Speicherseite auf die beschreibbare Kopie 72 umgelenkt. Zum Ende des Durchführens der Ausnahmebehandlung 18 führt das Programm 19 den Zugriff (diesmal mit Erfolg) erneut aus. Jeder weitere Zugriff auf diesen Datenbaustein (Teilbereich 71) und die zugehörige Speicherseite löst kein Durchführen der Ausnahmebehandlung 18 mehr aus, weil von nun ab die Umleitung auf die nicht schreibgeschützte Speicherseite 72 angewendet wird.

Zu Beginn jedes Durchlaufs wird ein Verzeichnis von Kopien 72 ausgelesen, das in der Ausnahmebehandlung 18 und/oder in der Speicherverwaltungseinheit 12 angelegt ist. Diese Kopien werden ebenfalls auf 'nur lesbar', d.h. als schreibgeschützt, gesetzt. Solche Kopien werden damit zu Kopien, die im Folgenden mit 'Kopie 71' bezeichnet werden. Nun wird die Übertragung von Daten aus den nun schreibgeschützten Kopien 71' zur Datensenke 20 erneut gestartet. Abgesehen vom ersten Durchlauf werden in jedem (folgenden) Durchlauf nur Daten solcher Kopien 71' zur Datensenke 20 übertragen, die im letzten Durchlauf angelegt wurden. Sobald zum Ende eines Durchlaufes keine Kopien 72 mehr vorliegen, ist die Übertragung der Daten zur Datensenke 20 abgeschlossen. Bei den zuletzt übertragenen noch schreibgeschützten Kopien 71' wird der Schreibschutz entfernt, bevor ein erneuter Schreibzugriff stattfinden kann. Das Übertragungsverfahren 100 erfordert einen Datenspeicher 14 mit einem Speicherplatz, der (einschließlich des für die weitere Instanz 19 im Normalbetrieb benötigten Speicherplatzes) maximal doppelt so groß ist, wie der Speicherplatz den die weitere Instanz 19 im Normalbetrieb benötigt.

Ein Zugriff an der Speicherverwaltungseinheit 12 vorbei ist hardwaretechnisch nicht möglich. Damit ist der Mechanismus transparent für Software 19 (Anwendungssoftware und/oder Betriebssystemsoftware), welche auf dem Zentralprozessor 11 ausgeführt wird. Im Normalbetrieb findet in der Speicherverwaltungseinheit 12 nur eine Abbildung (*mapping*) zwischen virtuellen und physikalischen Adressen statt. Beim Aufdaten jedoch fängt die Speicherverwaltungseinheit 12 Schreibzugriffe ab, so dass die Ausnahmebehandlung 18 die Kopien 72 anlegen kann und anschließend alle Lese- und Schreibzugriffe solcher Speicherseiten auf die Kopien 72 umlenkt.

Das Verwenden der Speicherverwaltungseinheit 12 zur Markierung von Teilbereichen, in die geschrieben wurde, ermöglicht eine Verwendung von Standard-Controllern für das Aufdaten in einem hochverfügbaren Automatisierungssystem. Die Schreibzugriffe können während der Übertragung der Daten von dem Datenspeicher 14 zu der Datensenke 20 mit einer hinreichenden Granularität erfasst werden, ohne das laufende Programm 19 zu sehr in seinem dynamischen Verhalten zu beeinflussen.

Das vorgeschlagene Konzept ermöglicht auch ein Hochrüsten von Standard-Controllern in hochverfügbare Controller per Firmware-Update, wenn auf eine genaue zeitliche Synchronisation (Sync-Kopplung) verzichtet wird.

Die FIG 2 zeigt den Ablauf eines Verfahrens 100 zum Auslesen eines Datenspeichers 14, das folgende Schritte umfasst. In einem ersten Schritt 110 wird mindestens ein erster Teilbereich 71 des Datenspeichers 14 gegen Schreibzugriffe geschützt. In einem zweiten Schritt 120 werden Daten aus den schreibgeschützten ersten Teilbereichen 71 zu einer Datensenke 20 übertragen, wobei folgende Schritte durchgeführt werden, wenn durch eine weitere Instanz 19 ein Schreibzugriff auf einen der schreibgeschützten ersten Teilbereiche 71 erfolgt: Erkennen 121 des Schreibzugriffs auf den schreibgeschützten ersten Teilbereich 71, Kopieren 122 der Daten des schreibgeschützten ersten Teilbereichs 71 in einen zweiten Teilbereich 72 des Datenspeichers 14, Freischalten 123 des zweiten Teilbereichs 72 für mindestens einen Schreibzugriff der weiteren Instanz 19, Einrichten 124 einer Umleitung zumindest für Zugriffe der weiteren Instanz 19, die an den schreibgeschützten ersten Teilbereich 71 gerichtet sind, auf den zweiten Teilbereich 72 und Durchführen 125 des Schreibzugriffs auf den zweiten Teilbereich 72.

### Bezugszeichenliste

- 10: erster Controller
- 11: erster Prozessor
- 12: Speicherverwaltungseinheit
- 13: Busanschluss
- 14: Datenspeicher
- 18: Ausnahmebehandlung
- 19: Anwendungssoftware
- 20: Datensenke
- 30: Datenverarbeitungsvorrichtung
- 71: erster Teilbereich
- 71': schreibgeschützte Kopie
- 72: zweiter Teilbereich
- 100: Verfahren zum Auslesen eines Datenspeichers
- 110: Schützen mindestens eines ersten Teilbereichs
- 120: Übertragen von Daten
- 121: Erkennen des Schreibzugriffs
- 122: Kopieren der Daten in einen zweiten Teilbereich
- 123: Freischalten des zweiten Teilbereichs
- 124: Einrichten einer Umleitung
- 125: Durchführen des Schreibzugriffs

## Patentansprüche

1. Verfahren (100) zum Auslesen eines Datenspeichers (14), **dadurch gekennzeichnet, dass**
das Verfahren (100) folgende Schritte umfasst:
- Schützen (110) mindestens eines ersten Teilbereichs (71) des Datenspeichers (14) gegen Schreibzugriffe; und
- Übertragen (120) von Daten aus den schreibgeschützten ersten Teilbereichen (71) zu einer Datensenke (20), wobei folgende Schritte durchgeführt werden, wenn durch eine weitere Instanz (19) ein Schreibzugriff auf einen der schreibgeschützten ersten Teilbereiche (71) erfolgt: Erkennen (121) des Schreibzugriffs auf den schreibgeschützten ersten Teilbereich (71), Kopieren (122) der Daten des schreibgeschützten ersten Teilbereichs (71) in einen zweiten Teilbereich (72) des Datenspeichers (14), Freischalten (123) des zweiten Teilbereichs (72) für mindestens einen Schreibzugriff der weiteren Instanz (19), Einrichten (124) einer Umleitung zumindest für Zugriffe der weiteren Instanz (19), die an den schreibgeschützten ersten Teilbereich (71) gerichtet sind, auf den zweiten Teilbereich (72) und Durchführen (125) des Schreibzugriffs auf den zweiten Teilbereich (72).

2. Verfahren (100) nach Anspruch 1, **dadurch gekennzeichnet, dass** die Umleitung auch Lesezugriffe der weiteren Instanz (19), die an den schreibgeschützten ersten Teilbereich (71) gerichtet sind, auf den zweiten Teilbereich (72) des Datenspeichers umleitet.

3. Verfahren (100) nach Anspruch 1 oder 2, **dadurch gekennzeichnet, dass** ein Übertragen von Daten aus einem schreibgeschützten ersten Teilbereich (71) zu der Datensenke (20) abgebrochen wird, wenn ein Schreibzugriff auf einen schreibgeschützten Teilbereich (71) erkannt wurde, dessen Daten gerade zur Datensenke (20) übertragen werden.

4. Verfahren (100) nach einem der Ansprüche 1 bis 3 **dadurch gekennzeichnet, dass** der Schreibzugriff auf den schreibgeschützten ersten Teilbereich (71) ein Ausführen einer Sonderbehandlungsroutine veranlasst.

5. Verfahren (100) nach Anspruch 4, **dadurch gekennzeichnet, dass** zum Veranlassen des Ausführens der Sonderbehandlungsroutine und/oder zum Ausführen der Sonderbehandlungsroutine eine Funktion einer Speicherverwaltungseinheit (12) genutzt wird.

6. Verfahren (100) nach Anspruch 4 oder 5, **dadurch gekennzeichnet, dass** das Veranlassen des Ausführens der Sonderbehandlungsroutine das Kopieren (122) der Daten von einem schreibgeschützten ersten Teilbereich (71) in einen zweiten Teilbereich (72) und/oder das Freischalten (123) eines zweiten Teilbereichs (72) für mindestens einen Schreibzugriff und/oder das Einrichten (124) einer Umleitung und/oder das Durchführen (125) eines Schreibzugriffs auf einen zweiten Teilbereich umfasst.

7. Verfahren (100) nach einem der Ansprüche 1 bis 6, **dadurch gekennzeichnet, dass** der zweite Teilbereich (72) nach Ablauf des Schreibzugriffs schreibgeschützt wird und für den weiteren Ablauf des Verfahrens (100) als ein neuer schreibgeschützter erster Teilbereich (71') angesehen wird.

8. Verfahren (100) nach Anspruch 7, **dadurch gekennzeichnet, dass** mit Einrichten des Schreibschutzes für den ursprünglich zweiten Teilbereich (72) auch für Lesezugriffe der Datensenke (20) auf den ersten Teilbereich (71) eine Umleitung auf den neuen ersten Teilbereich (71') eingerichtet wird.

9. Verfahren (100) nach Anspruch 7 oder 8, **dadurch gekennzeichnet, dass** das Schützen des zweiten Teilbereichs (72) gegen Schreibzugriffe erst nach Ablauf einer Karenzzeit nach Erkennung oder Ablauf des Schreibzugriffs erfolgt und/oder erst erfolgt, wenn ein vorbestimmter Anteil von noch nicht umgeleiteten ersten Teilbereichen (71) ausgelesen ist, und/oder erst erfolgt, wenn eine vorbestimmte Anzahl von noch nicht umgeleiteten ersten Teilbereichen (71) ausgelesen ist.

10. Vorrichtung (10) zum Auslesen eines Datenspeichers, **dadurch gekennzeichnet, dass**
die Vorrichtung (10) zum Durchführen des Verfahrens (100) nach einem der Ansprüche 1 bis 9 vorbereitet ist.
